# EUROPEAN PATENT SPECIFICATION

(11) **EP 4 306 020 B1**
(45) Date of publication and mention of the grant of the patent: **09.04.2025**
(21) Application number: 23156918.7
(22) Date of filing: 15.02.2023
(51) Int. Cl.: A47L 5/24, A47L 7/00, A47L 9/14, A47L 9/28

(54) **DEVICE STRUCTURE FOR AUTOMATICALLY OPENING AND CLOSING WASTEWATER TANK VALVE OF CLEANING MACHINE**
VORRICHTUNG ZUM AUTOMATISCHEN ÖFFNEN UND SCHLIESSEN EINES ABWASSERTANKVENTILS EINER REINIGUNGSMASCHINE
STRUCTURE DE DISPOSITIF POUR OUVRIR ET FERMER AUTOMATIQUEMENT UNE SOUPAPE DE RÉSERVOIR D'EAUX USÉES D'UNE MACHINE DE NETTOYAGE

(30) Priority: 11.07.2022 CN 202210808195
(43) Date of publication of application: 17.01.2024
(73) Proprietor: GuangDong Well Technology Co., Ltd, Huizhou, Guangdong 516213 (CN)
(72) Inventor: NING, Jianqiang, Huizhou City, Guangdong Province, 516213 (CN)
(74) Representative: Meyer, Thorsten

(56) References cited:
- DE-A1- 102020 118 595
- US-A1- 2016 128 528
- US-A1- 2018 296 044

## Description

### TECHNICAL FIELD

The present disclosure relates to the technical field of cleaning machines, and in particular, to a device structure for automatically opening and closing a wastewater tank valve of a cleaning machine.

### BACKGROUND

Devices, such as handheld fabric cleaning machines (or carpet washing machines), usually use a large-power suction motor to suck wastewater in a fabric (or carpet) obtained after washing the fabric (or carpet) by a rolling brush into a water-air separation chamber through a pipeline. After water-air separation, the wastewater enters a wastewater tank, and separated air is discharged out of the handheld fabric cleaning machines by means of a main motor (i.e., a suction motor).

Currently, in all the handheld fabric cleaning machines (or carpet washing machines) on the market, after the wastewater obtained by the water-air separation enters the wastewater tank, there is no special valve (in a case where the main motor does not operate) to close the wastewater tank. In this case, the wastewater tank is communicated with the water-air separation chamber. Therefore, the following defects may occur when the main motor does not operate:

1. Because of the convenience and flexibility of a handheld fabric cleaning machine (or carpet washing machine), a user does not always keep the machine in a horizontal position state when holding the machine in hand. Therefore, the machine will incline forwards or backwards, or incline leftwards or rightwards.

2. After the user finishes cleaning with the handheld fabric cleaning machine (or carpet washing machine), the machine may fall over when the user places the machine.

When the above two cases occur, the wastewater stored in the wastewater tank may flow back through a wastewater tank inlet, enter the water-air separation chamber, the motor or the pipeline, and even enter the handheld fabric cleaning machine body, and finally flow out of different parts of the handheld fabric cleaning machine body, thereby causing secondary pollution. A device structure for closing a wastewater tank of a cleaning machine is already known e.g from US-A-2018296044.

### SUMMARY

An objective of the present invention is to provide a device structure for automatically opening and closing a wastewater tank valve of a cleaning machine, to solve the technical problem set forth in the background art that when the above two defects occur, the wastewater stored in the wastewater tank may flow back through the wastewater tank inlet, enter the water-air separation chamber, the motor or the pipeline, and even enter the handheld fabric cleaning machine body, and finally flow out of different parts of the handheld fabric cleaning machine body, thereby forming the secondary pollution.

To achieve the above objective, the technical solution of the present invention provides a device structure for automatically opening and closing a wastewater tank valve of a cleaning machine, including a cleaning machine body. A water-air separation chamber is provided at a top of the cleaning machine body, a wastewater tank is detachably mounted at a bottom of the cleaning machine body, one end of the water-air separation chamber is connected to a water drawing pipe and the other end of the water-air separation chamber is connected to a main motor having a suction function, a drain port is provided at a bottom end of the water-air separation chamber, a wastewater tank inlet is provided at a top end of the wastewater tank, and the drain port is communicated with the wastewater tank inlet. The wastewater tank inlet is cooperated with a water closing valve which is connected to a drive device, the drive device is capable of driving the water closing valve to open and close the wastewater tank inlet, the drive device is connected to a main control board with wires, and the main motor is connected to the main control board with wires.

Further, a rotating shaft extending forwards and backwards is provided in the wastewater tank, the rotating shaft is disposed at a lower right side of the wastewater tank inlet, the rotating shaft is movably connected to one end of a valve support, and the other end of the valve support is connected to the water closing valve; and the drive device is connected to the valve support and is capable of driving the other end of the valve support connected to the water closing valve to swing up and down around the rotating shaft, such that the water closing valve is capable of moving upwards to block the wastewater tank inlet or moving downwards to separate from the wastewater tank inlet.

Further, the drive device includes a drive device body and a torsion spring, the torsion spring is disposed on the rotating shaft and is capable of driving the other end of the valve support connected to the water closing valve to automatically swing up around the rotating shaft, such that the water closing valve is capable of moving upwards to block the wastewater tank inlet; and alternatively, the drive device body is connected to the main control board with wires, and the drive device body is capable of driving the other end of the valve support connected to the water closing valve to swing down, such that the water closing valve is capable of moving downwards to separate from the wastewater tank inlet.

Further, a through hole is further provided in the top end of the wastewater tank, the through hole is disposed at a right side of the wastewater tank inlet and located above the valve support, and a thimble capable of moving up and down is provided in the through hole; and a bottom end of the thimble downwards abuts against the valve support, the thimble is disposed between the water closing valve and the rotating shaft, and the drive device body is disposed above the through hole and is capable of driving the thimble to move downwards.

Further, an arc-shaped portion is provided on the bottom end of the thimble, a face-up arc-shaped surface is provided on a middle of the valve support, which is in sliding fit with the arc-shaped portion.

Further, a width of the arc-shaped portion is greater than an inner diameter of the through hole.

Further, the drive device body includes a micro motor and a transmission connecting rod, the transmission connecting rod is disposed above the thimble, the micro motor is connected to the main control board with wires, the micro motor is capable of driving the transmission connecting rod to move up and down, and the transmission connecting rod is capable of driving the thimble to move downwards.

Further, a tooth row arranged up and down is provided on a side wall of a top end of the transmission connecting rod, an output shaft of the micro motor extends horizontally and is connected to a gear, and the gear is engaged with the tooth row.

Further, the micro motor and the transmission connecting rod are disposed in the cleaning machine body.

Further, the main motor and the main control board are disposed in the cleaning machine body.

In conclusion, with the above technical solutions, the present invention has the following beneficial effects: the structural design is reasonable in the present invention; the wastewater tank inlet is cooperated with the water closing valve, the water closing valve is connected to the drive device, the drive device can drive the water closing valve to open and close the wastewater tank inlet, the drive device is connected to the main control board with wires, and the main motor is connected to the main control board with wires, such that the main motor and the drive device can cooperate. That is, when the main motor is working, the drive device can drive the water closing valve to open the wastewater tank inlet, such that the wastewater in the water-air separation chamber can enter the wastewater tank; and when the main motor stops working, the drive device can drive the water closing valve to close the wastewater tank inlet to achieve a purpose of water closing. In this way, when the above two defects set forth in the background art occur, the water closing valve can effectively prevent the wastewater stored in the wastewater tank from flowing back through the wastewater tank inlet.

### BRIEF DESCRIPTION OF THE DRAWINGS

FIG. 1 is a schematic cross-sectional structural diagram of a device structure according to the present disclosure with a water closing valve closed;
FIG. 2 is a schematic cross-sectional structural diagram of a device structure according to the present disclosure with a water closing valve opened;
FIG. 3 is a schematic three-dimensional structural diagram of a wastewater tank a device structure according to the present disclosure; and
FIG. 4 is a schematic cross-sectional structural diagram obtained after sectioning along a sectioning line A-A in FIG. 3.

Reference Numerals: 1-Cleaning machine body; 2-Water-air separation chamber, 201-Drain port; 3-Wastewater tank, 301-Wastewater tank inlet, 302-Through hole; 4-Main motor, 5-Water closing valve, 6-Main control board, 7-Rotating shaft; 8-Valve support, 801-Arc-shaped surface; 9-Torsion spring; 10-Thimble, 1001-Arc-shaped portion; 11-Micro motor; 12-Transmission connecting rod, 1201-Tooth row; 13-Gear.

### DETAILED DESCRIPTION

The technical solutions of the present invention will be described below clearly and completely with reference to the drawings in the embodiment of the present disclosure, however, the protection scope of the present disclosure is not limited thereto.

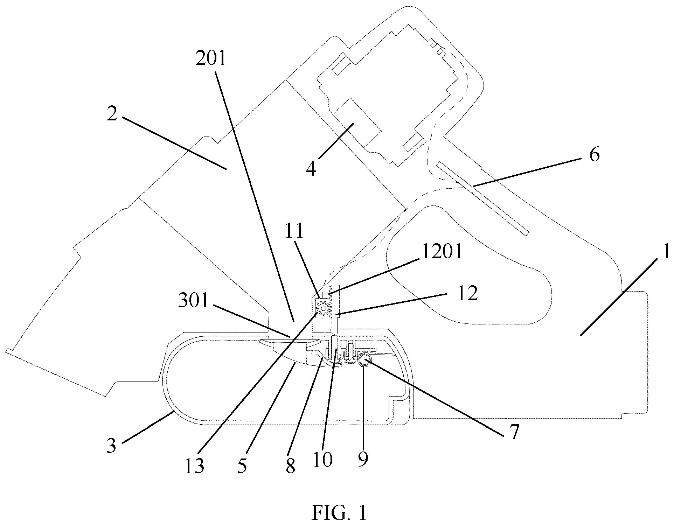

In the present invention, for a clearer description, the following explanations are made: an observer faces FIG. 1 to observe, the left side of the observer is defined as left, the right side of the observer is defined as right, the front of the observer is defined as front, the rear of the observer is defined as rear, the upper side of the observer is defined as top, and the lower side of the observer is defined as bottom. It should be pointed out that the orientation or positional relationship indicated by the terms "front", "rear", "left", "right", "middle", "above" and "below" in the text represents the orientation or positional relationship set on the basis of the drawings. These terms are merely intended to facilitate the description of the present invention, rather than to indicate or imply that the mentioned structure or components must have a specific orientation or must be constructed in a specific orientation. Therefore, these terms should not be understood as a limitation to the present invention. Moreover, the terms "first", "second", "third", and "fourth" are used only for the purpose of clarifying or simplifying the description, and are not intended to indicate or imply relative importance or quantity.

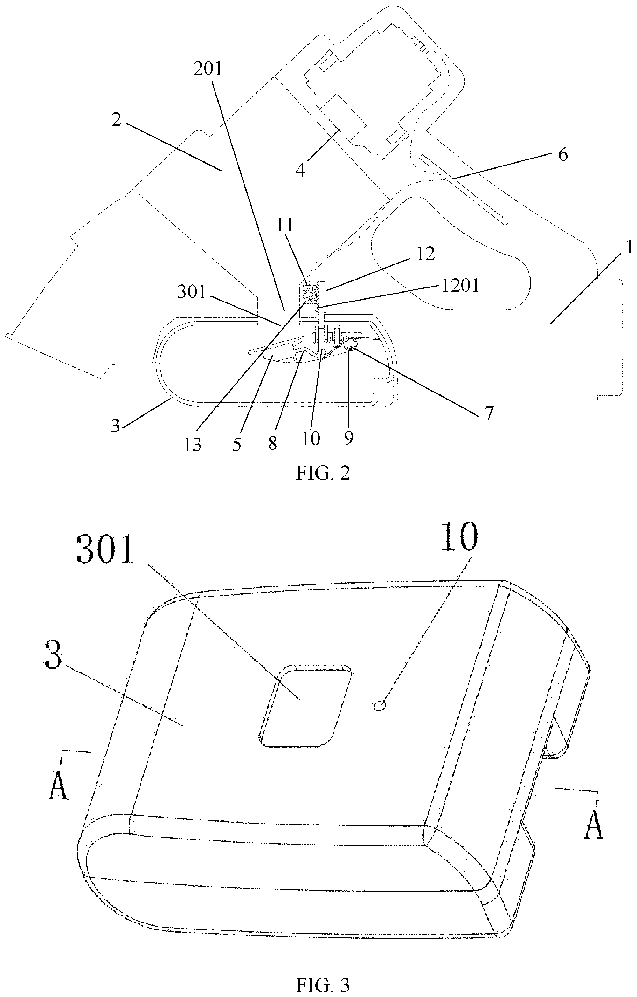

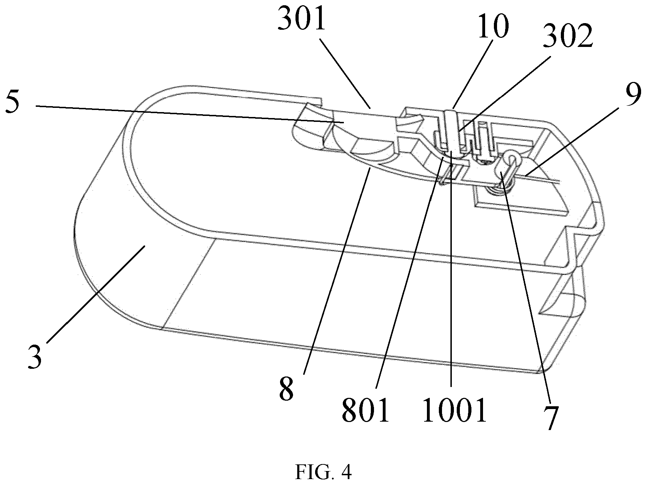

Refer to FIG. 1 to FIG. 4. The present embodiment provides a device structure for automatically opening and closing a wastewater tank valve of a cleaning machine, including a cleaning machine body 1. A water-air separation chamber 2 is provided at a top of the cleaning machine body 1, a wastewater tank 3 is detachably mounted at a bottom of the cleaning machine body 1, one end of the water-air separation chamber 2 is connected to a water drawing pipe (not shown in the drawings) and the other end of the water-air separation chamber 2 is connected to a main motor 4 having a suction function, a drain port 201 is provided at a bottom end of the water-air separation chamber 2, a wastewater tank inlet 301 is provided at a top end of the wastewater tank 3, and the drain port 201 is communicated with the wastewater tank inlet 301; and the wastewater tank inlet 301 is cooperated with a water closing valve 5, the water closing valve 5 is connected to a drive device, the drive device is capable of driving the water closing valve 5 to open and close the wastewater tank inlet 301, the drive device is connected to a main control board 6 with wires, and the main motor 4 is connected to the main control board 6 with wires. Effects: the wastewater tank inlet is cooperated with the water closing valve, the water closing valve is connected to the drive device, the drive device can drive the water closing valve to open and close the wastewater tank inlet, the drive device is connected to the main control board with wires, and the main motor is connected to the main control board with wires, such that the main motor and the drive device can cooperate. That is, when the main motor is working, the drive device can drive the water closing valve to open the wastewater tank inlet, such that the wastewater in the water-air separation chamber can enter the wastewater tank; and when the main motor stops working, the drive device can drive the water closing valve to close the wastewater tank inlet to achieve the purpose of water closing. In this way, when the above two defects set forth in the background art occur, the water closing valve can effectively prevent the wastewater stored in the wastewater tank from flowing back through the wastewater tank inlet. Description: by the limitation "the main motor is working" means that when the user uses the handheld fabric cleaning machine (or carpet washing machine), the main motor having the suction function is powered up. The main motor has the functions of sucking the wastewater into the water-air separation chamber through the water drawing pipe, then separating the wastewater from air in the water-air separation chamber, and extracting the air out of the cleaning machine body. The cleaning machine refers to the handheld fabric cleaning machine or the carpet washing machine. The wastewater tank attached to the cleaning machine body refers to a wastewater tank which is detachable. The user can easily detach the wastewater tank for cleaning when cleaning the wastewater tank.

Specifically, a rotating shaft 7 extending forwards and backwards is provided in the wastewater tank 3, the rotating shaft 7 is disposed at a lower right side of the wastewater tank inlet 301, the rotating shaft 7 is movably connected to one end of a valve support 8, and the other end of the valve support 8 is connected to the water closing valve 5; and the drive device is connected to the valve support 8 and is capable of driving the other end of the valve support 8 connected to the water closing valve 5 to swing up and down around the rotating shaft 7, such that the water closing valve 5 is capable of moving upwards to block the wastewater tank inlet 301 or moving downwards to separate from the wastewater tank inlet 301. Effect: by moving the other end of the valve support around the rotating shaft, the up-down swing trajectory of the water closing valve driven by the valve support is accurate and stable.

Specifically, the drive device includes a drive device body and a torsion spring 9, the torsion spring 9 is disposed on the rotating shaft 7 and is capable of driving the other end of the valve support 8 connected to the water closing valve 5 to automatically swing up around the rotating shaft 7, such that the water closing valve 5 is capable of moving upwards to block the wastewater tank inlet 301; and the drive device body is connected to the main control board 6 with wires and is capable of driving the other end of the valve support 8 connected to the water closing valve 5 to swing down, such that the water closing valve 5 is capable of moving downwards to separate from the wastewater tank inlet 301. Effects: a water closing valve controlled by the torsion spring is provided in the wastewater tank, and this water closing valve is in a normally closed state under the action of the torsion spring, so that when the wastewater tank is disassembled from the cleaning machine body or assembled with the cleaning machine body, the water closing valve is always in a closed state. Two free elastic arms at tail ends of the torsion spring can be connected and cooperated with the valve support and an inner wall of the wastewater tank, respectively, and of course, other structural modes may also be adopted, as long as the torsion spring can drive the other end of the valve support connected to the water closing valve to automatically swing up around the rotating shaft.

Specifically, a through hole 302 is further provided in the top end of the wastewater tank 3, the through hole 302 is disposed at a right side of the wastewater tank inlet 301 and located above the valve support 8, and a thimble 10 capable of moving up and down is provided in the through hole 302; and a bottom end of the thimble 10 downwards abuts against the valve support 8, the thimble 10 is disposed between the water closing valve 5 and the rotating shaft 7, and the drive device body is disposed above the through hole 302 and is capable of driving the thimble 10 to move downwards. Effects: a thimble is provided, with one end is placed on the valve support, so that when the thimble is stressed, the valve support is forced to move downwards, thereby opening the water closing valve, and when the thimble is not stressed, the torsion spring acts on the valve support, and the water closing valve is closed.

Specifically, an arc-shaped portion 1001 is provided on the bottom end of the thimble 10, and a face-up arc-shaped surface 801 is provided on a middle of the valve support 8, which is in sliding fit with the arc-shaped portion 1001. Effects: by means of sliding fit between the arc-shaped portion and the arc-shaped surface, it is convenient for the thimble to eject the valve support downwards.

Specifically, a width of the arc-shaped portion 1001 is greater than an inner diameter of the through hole 302. Effects: such a design can prevent the thimble from moving upwards out of the through hole.

Specifically, the drive device body includes a micro motor 11 and a transmission connecting rod 12, the transmission connecting rod 12 is disposed above the thimble 10, the micro motor 11 is connected to the main control board 6 with wires, the micro motor 11 is capable of driving the transmission connecting rod 12 to move up and down, and the transmission connecting rod 12 is capable of driving the thimble 10 to move downwards. Effects: the wastewater tank is detachable. When the wastewater tank is mounted to the cleaning machine body, the micro motor drives the transmission connecting rod to move. When the transmission connecting rod is stressed to act on the thimble of the wastewater tank, the thimble is stressed to act on the valve support, thereby opening the water closing valve. When the action force of the transmission connecting rod on the thimble disappears, the water closing valve of the wastewater tank is closed under the action of the torsion spring. By the cooperation of the micro motor and the main motor, when the main motor is working, the micro motor operates to drive the transmission connecting rod, and the water closing valve is opened; and when the main motor stops working, the micro motor operates reversely, the transmission connecting rod is not stressed, and the water closing valve is closed under the action of the torsion spring.

Specifically, a tooth row 1201 arranged up and down is provided on a side wall of a top end of the transmission connecting rod 12, an output shaft of the micro motor 11 extends horizontally and is connected to a gear 13, and the gear 13 is engaged with the tooth row 1201. Effects: the transmission connecting rod is driven to move up and down through the engagement effect between the gear and the tooth row.

Specifically, the micro motor 11 and the transmission connecting rod 12 are disposed in the cleaning machine body 1. Effect: the micro motor and the transmission connecting rod are disposed in the cleaning machine body to better cooperate with the thimble.

Specifically, the main motor 4 and the main control board 6 are disposed in the cleaning machine body 1. Effects: the main motor and the main control board can be protected in the cleaning machine body.

In actual work: under the control of the main control board, the main motor and the micro motor cooperate, the micro motor employs the gear to drive the transmission connecting rod to move downwards, and the transmission connecting rod drives the thimble of the wastewater tank to transmit power to the valve support of the wastewater tank, so that the water closing valve of the wastewater tank is opened, and the wastewater enters the wastewater tank. Under the control of the main control board, when the main motor stops working, the micro motor employs the gear to drive the transmission connecting rod to move upwards, and the valve support of the wastewater tank is not stressed, so that the water closing valve is closed under the action of the torsion spring so as to achieve the purpose of water closing for the wastewater tank.

In conclusion, the present invention has the beneficial effect that the wastewater in the wastewater tank is controllable and is always stored in the wastewater tank. No matter what state the cleaning machine body is in, the wastewater in the wastewater tank does not flow out, and does not cause secondary pollution. Because the micro motor is cooperated with the main motor, the water closing valve of the wastewater tank is opened only when the main motor is working. After the main motor stops working, the water closing valve of the wastewater tank is closed to achieve the effect that the wastewater does not flow out in any state.

## Claims

1. A device structure for automatically opening and closing a wastewater tank valve of a cleaning machine, comprising a cleaning machine body (1), wherein a water-air separation chamber (2) is provided at a top of the cleaning machine body (1), a sewage tank (3) is detachably mounted at a bottom of the cleaning machine body (1), one end of the water-air separation chamber (2) is connected to a water drawing pipe and the other end of the water-air separation chamber (2) is connected to a main motor (4) having a suction function, a drain port (201) is provided at a bottom end of the water-air separation chamber (2), a wastewater tank inlet (301) is provided at a top end of the wastewater tank (3), and the drain port (201) is communicated with the wastewater tank inlet (301); and the wastewater tank inlet (301) is cooperated with a water closing valve (5), the water closing valve (5) is connected to a drive device which is capable of driving the water closing valve (5) to open and close the wastewater tank inlet (301), the drive device is connected to a main control board (6) with wires, and the main motor (4) is connected to the main control board (6) with wires.

2. The device structure for automatically opening and closing a wastewater tank valve of a cleaning machine according to claim 1, wherein a rotating shaft (7) extending forwards and backwards is provided in the wastewater tank (3), the rotating shaft (7) is disposed at a lower right side of the wastewater tank inlet (301), the rotating shaft (7) is movably connected to one end of a valve support (8), and the other end of the valve support (8) is connected to the water closing valve (5); and the drive device is connected to the valve support (8) and is capable of driving the other end of the valve support (8) connected to the water closing valve (5) to swing up and down around the rotating shaft (7), such that the water closing valve (5) is capable of moving upwards to block the wastewater tank inlet (301) or moving downwards to separate from the wastewater tank inlet (301).

3. The device structure for automatically opening and closing a wastewater tank valve of a cleaning machine according to claim 2, wherein the drive device comprises a drive device body and a torsion spring (9), the torsion spring (9) is disposed on the rotating shaft (7) and is capable of driving the other end of the valve support (8) connected to the water closing valve (5) to automatically swing up around the rotating shaft (7), such that the water closing valve (5) is capable of moving upwards to block the wastewater tank inlet (301); and alternatively, the drive device body is connected to the main control board (6) with wires and is capable of driving the other end of the valve support (8) connected to the water closing valve (5) to swing down, such that the water closing valve (5) is capable of moving downwards to separate from the wastewater tank inlet (301).

4. The device structure for automatically opening and closing a wastewater tank valve of a cleaning machine according to claim 3, wherein a through hole (302) is further provided in the top end of the wastewater tank (3), the through hole (302) is disposed at a right side of the wastewater tank inlet (301) and located above the valve support (8), and a thimble (10) capable of moving up and down is provided in the through hole (302); and a bottom end of the thimble (10) downwards abuts against the valve support (8), the thimble (10) is disposed between the water closing valve (5) and the rotating shaft (7), and the drive device body is disposed above the through hole (302) and is capable of driving the thimble (10) to move downwards.

5. The device structure for automatically opening and closing a wastewater tank valve of a cleaning machine according to claim 4, wherein an arc-shaped portion (1001) is provided on the bottom end of the thimble (10), and a face-up arc-shaped surface (801) is provided on a middle of the valve support (8), which is in sliding fit with the arc-shaped portion (1001).

6. The device structure for automatically opening and closing a wastewater tank valve of a cleaning machine according to claim 5, wherein a width of the arc-shaped portion (1001) is greater than an inner diameter of the through hole (302).

7. The device structure for automatically opening and closing a wastewater tank valve of a cleaning machine according to any one of claims 4-6, wherein the drive device body comprises a micro motor (11) and a transmission connecting rod (12), the transmission connecting rod (12) is disposed above the thimble (10), the micro motor (11) is connected to the main control board (6) with wires, the micro motor (11) is capable of driving the transmission connecting rod (12) to move up and down, and the transmission connecting rod (12) is capable of driving the thimble (10) to move downwards.

8. The device structure for automatically opening and closing a wastewater tank valve of a cleaning machine according to claim 7, wherein a tooth row (1201) arranged up and down is provided on a side wall of a top end of the transmission connecting rod (12), an output shaft of the micro motor (11) extends horizontally and is connected to a gear (13), and the gear (13) is engaged with the tooth row (1201).

9. The device structure for automatically opening and closing a wastewater tank valve of a cleaning machine according to claim 8, wherein the micro motor (11) and the transmission connecting rod (12) are disposed in the cleaning machine body (1).

10. The device structure for automatically opening and closing a wastewater tank valve of a cleaning machine according to any one of claims 1-6, 8, and 9, wherein the main motor (4) and the main control board (6) are disposed in the cleaning machine body (1).

## Patentansprüche

1. Eine Vorrichtungsstruktur zum automatischen Öffnen und Schließen eines Abwassertankventils einer Reinigungsmaschine, umfassend einen Reinigungsmaschinenkörper (1), wobei eine Wasser-Luft-Trennkammer (2) an einer Oberseite des Reinigungsmaschinenkörpers (1) vorgesehen ist, ein Abwassertank (3) lösbar an einer Unterseite des Reinigungsmaschinenkörpers (1) montiert ist, ein Ende der Wasser-Luft-Trennkammer (2) mit einem Wasseransaugrohr verbunden ist und das andere Ende der Wasser-Luft-Trennkammer (2) mit einem Hauptmotor (4) mit Saugfunktion verbunden ist, eine Ablauföffnung (201) an einem unteren Ende der Wasser-Luft-Trennkammer (2) vorgesehen ist, eine Abwassertanköffnung (301) an einem oberen Ende des Abwassertanks (3) vorgesehen ist und die Ablauföffnung (201) mit der Abwassertanköffnung (301) in Verbindung steht;
und die Abwassertanköffnung (301) mit einem Wasserabsperrventil (5) zusammenwirkt, das Wasserabsperrventil (5) mit einer Antriebsvorrichtung verbunden ist, die das Wasserabsperrventil (5) zum Öffnen und Schließen der Abwassertanköffnung (301) antreiben kann, die Antriebsvorrichtung mit einer Hauptsteuerplatine (6) verdrahtet verbunden ist, und der Hauptmotor (4) mit der Hauptsteuerplatine (6) verdrahtet verbunden ist.

2. Die Vorrichtungsstruktur zum automatischen Öffnen und Schließen eines Abwassertankventils einer Reinigungsmaschine nach Anspruch 1, wobei eine sich vorwärts und rückwärts erstreckende Drehwelle (7) im Abwassertank (3) vorgesehen ist, die Drehwelle (7) an einer unteren rechten Seite der Abwassertanköffnung (301) angeordnet ist, die Drehwelle (7) beweglich mit einem Ende einer Ventilhalterung (8) verbunden ist, und das andere Ende der Ventilhalterung (8) mit dem Wasserabsperrventil (5) verbunden ist;
und die Antriebsvorrichtung mit der Ventilhalterung (8) verbunden ist und das andere Ende der Ventilhalterung (8), das mit dem Wasserabsperrventil (5) verbunden ist, um die Drehwelle (7) nach oben und unten schwenken kann, sodass das Wasserabsperrventil (5) nach oben bewegt werden kann, um die Abwassertanköffnung (301) zu blockieren, oder nach unten bewegt werden kann, um sich von der Abwassertanköffnung (301) zu lösen.

3. Die Vorrichtungsstruktur zum automatischen Öffnen und Schließen eines Abwassertankventils einer Reinigungsmaschine nach Anspruch 2, wobei die Antriebsvorrichtung einen Antriebsvorrichtungskörper und eine Torsionsfeder (9) umfasst, die Torsionsfeder (9) an der Drehwelle (7) vorgesehen ist und das andere Ende der Ventilhalterung (8), das mit dem Wasserabsperrventil (5) verbunden ist, automatisch nach oben um die Drehwelle (7) schwenken kann, sodass das Wasserabsperrventil (5) nach oben bewegt werden kann, um die Abwassertanköffnung (301) zu blockieren;
und alternativ der Antriebsvorrichtungskörper mit der Hauptsteuerplatine (6) verdrahtet verbunden ist und das andere Ende der Ventilhalterung (8), das mit dem Wasserabsperrventil (5) verbunden ist, nach unten schwenken kann, sodass das Wasserabsperrventil (5) nach unten bewegt werden kann, um sich von der Abwassertanköffnung (301) zu lösen.

4. Die Vorrichtungsstruktur zum automatischen Öffnen und Schließen eines Abwassertankventils einer Reinigungsmaschine nach Anspruch 3, wobei ein Durchgangsloch (302) weiter an der Oberseite des Abwassertanks (3) vorgesehen ist, das Durchgangsloch (302) an einer rechten Seite der Abwassertanköffnung (301) angeordnet und oberhalb der Ventilhalterung (8) positioniert ist, und ein in vertikaler Richtung beweglicher Stößel (10) im Durchgangsloch (302) vorgesehen ist; und ein unteres Ende des Stößels (10) nach unten gegen die Ventilhalterung (8) anliegt, der Stößel (10) zwischen dem Wasserabsperrventil (5) und der Drehwelle (7) angeordnet ist, und der Antriebsvorrichtungskörper oberhalb des Durchgangslochs (302) vorgesehen ist und den Stößel (10) nach unten bewegen kann.

5. Die Vorrichtungsstruktur zum automatischen Öffnen und Schließen eines Abwassertankventils einer Reinigungsmaschine nach Anspruch 4, wobei ein bogenförmiger Abschnitt (1001) an einem unteren Ende des Stößels (10) vorgesehen ist und eine nach oben gerichtete bogenförmige Fläche (801) in einer mittleren Position der Ventilhalterung (8) vorgesehen ist, die in Gleitpassung mit dem bogenförmigen Abschnitt (1001) steht.

6. Die Vorrichtungsstruktur zum automatischen Öffnen und Schließen eines Abwassertankventils einer Reinigungsmaschine nach Anspruch 5, wobei eine Breite des bogenförmigen Abschnitts (1001) größer ist als ein Innendurchmesser des Durchgangslochs (302).

7. Die Vorrichtungsstruktur zum automatischen Öffnen und Schließen eines Abwassertankventils einer Reinigungsmaschine nach einem der Ansprüche 4-6, wobei der Antriebsvorrichtungskörper einen Mikromotor (11) und eine Übertragungsverbindungsstange (12) umfasst, die Übertragungsverbindungsstange (12) oberhalb des Stößels (10) vorgesehen ist, der Mikromotor (11) mit der Hauptsteuerplatine (6) verdrahtet verbunden ist, der Mikromotor (11) die Übertragungsverbindungsstange (12) in vertikaler Richtung bewegen kann, und die Übertragungsverbindungsstange (12) den Stößel (10) nach unten bewegen kann.

8. Die Vorrichtungsstruktur zum automatischen Öffnen und Schließen eines Abwassertankventils einer Reinigungsmaschine nach Anspruch 7, wobei eine in vertikaler Richtung angeordnete Zahnreihe (1201) an einer Seitenwand eines oberen Endes der Übertragungsverbindungsstange (12) vorgesehen ist, eine Ausgangswelle des Mikromotors (11) sich horizontal erstreckt und mit einem Zahnrad (13) verbunden ist, und das Zahnrad (13) mit der Zahnreihe (1201) im Eingriff steht.

9. Die Vorrichtungsstruktur zum automatischen Öffnen und Schließen eines Abwassertankventils einer Reinigungsmaschine nach Anspruch 8, wobei der Mikromotor (11) und die Übertragungsverbindungsstange (12) im Reinigungsmaschinenkörper (1) angeordnet sind.

10. Die Vorrichtungsstruktur zum automatischen Öffnen und Schließen eines Abwassertankventils einer Reinigungsmaschine nach einem der Ansprüche 1-6, 8 und 9, wobei der Hauptmotor (4) und die Hauptsteuerplatine (6) im Reinigungsmaschinenkörper (1) angeordnet sind.

## Revendications

1. Une structure de dispositif pour l'ouverture et la fermeture automatiques d'une vanne de réservoir d'eaux usées d'une machine de nettoyage, comprenant un corps de machine de nettoyage (1), une chambre de séparation eau-air (2) étant disposée sur une partie supérieure du corps de la machine de nettoyage (1), un réservoir d'eaux usées (3) étant monté de manière détachable sur une partie inférieure du corps de la machine de nettoyage (1), une extrémité de la chambre de séparation eau-air (2) étant reliée à un tuyau d'aspiration d'eau et l'autre extrémité de la chambre de séparation eau-air (2) étant reliée à un moteur principal (4) ayant une fonction d'aspiration, un orifice de vidange (201) étant disposé sur une extrémité inférieure de la chambre de séparation eau-air (2), une entrée du réservoir d'eaux usées (301) étant disposée sur une extrémité supérieure du réservoir d'eaux usées (3), et l'orifice de vidange (201) étant en communication avec l'entrée du réservoir d'eaux usées (301) ;
et l'entrée du réservoir d'eaux usées (301) étant associée à une vanne de fermeture d'eau (5), la vanne de fermeture d'eau (5) étant reliée à un dispositif d'entraînement capable d'actionner la vanne de fermeture d'eau (5) pour ouvrir et fermer l'entrée du réservoir d'eaux usées (301), le dispositif d'entraînement étant relié par des fils à une carte de commande principale (6), et le moteur principal (4) étant relié par des fils à la carte de commande principale (6).

2. La structure de dispositif pour l'ouverture et la fermeture automatiques d'une vanne de réservoir d'eaux usées d'une machine de nettoyage selon la revendication 1, un arbre rotatif (7) s'étendant vers l'avant et l'arrière étant prévu dans le réservoir d'eaux usées (3), l'arbre rotatif (7) étant disposé sur un côté inférieur droit de l'entrée du réservoir d'eaux usées (301), l'arbre rotatif (7) étant relié de manière mobile à une extrémité d'un support de vanne (8), et l'autre extrémité du support de vanne (8) étant reliée à la vanne de fermeture d'eau (5) ;
et le dispositif d'entraînement étant relié au support de vanne (8) et étant capable d'entraîner l'autre extrémité du support de vanne (8) reliée à la vanne de fermeture d'eau (5) à osciller vers le haut et vers le bas autour de l'arbre rotatif (7), de sorte que la vanne de fermeture d'eau (5) soit capable de se déplacer vers le haut pour bloquer l'entrée du réservoir d'eaux usées (301) ou de se déplacer vers le bas pour se séparer de l'entrée du réservoir d'eaux usées (301).

3. La structure de dispositif pour l'ouverture et la fermeture automatiques d'une vanne de réservoir d'eaux usées d'une machine de nettoyage selon la revendication 2, le dispositif d'entraînement comprenant un corps de dispositif d'entraînement et un ressort de torsion (9), le ressort de torsion (9) étant disposé sur l'arbre rotatif (7) et étant capable d'entraîner l'autre extrémité du support de vanne (8) reliée à la vanne de fermeture d'eau (5) à osciller automatiquement vers le haut autour de l'arbre rotatif (7), de sorte que la vanne de fermeture d'eau (5) soit capable de se déplacer vers le haut pour bloquer l'entrée du réservoir d'eaux usées (301) ;
et alternativement, le corps de dispositif d'entraînement étant relié par des fils à la carte de commande principale (6) et étant capable d'entraîner l'autre extrémité du support de vanne (8) reliée à la vanne de fermeture d'eau (5) à osciller vers le bas, de sorte que la vanne de fermeture d'eau (5) soit capable de se déplacer vers le bas pour se séparer de l'entrée du réservoir d'eaux usées (301).

4. La structure de dispositif pour l'ouverture et la fermeture automatiques d'une vanne de réservoir d'eaux usées d'une machine de nettoyage selon la revendication 3, un trou traversant (302) étant en outre prévu sur la partie supérieure du réservoir d'eaux usées (3), le trou traversant (302) étant disposé sur un côté droit de l'entrée du réservoir d'eaux usées (301) et situé au-dessus du support de vanne (8), et une tige de pression (10) capable de se déplacer verticalement étant prévue dans le trou traversant (302) ;
et une extrémité inférieure de la tige de pression (10) venant en butée vers le bas contre le support de vanne (8), la tige de pression (10) étant disposée entre la vanne de fermeture d'eau (5) et l'arbre rotatif (7), et le corps de dispositif d'entraînement étant disposé au-dessus du trou traversant (302) et étant capable d'entraîner la tige de pression (10) vers le bas.

5. La structure de dispositif pour l'ouverture et la fermeture automatiques d'une vanne de réservoir d'eaux usées d'une machine de nettoyage selon la revendication 4, une portion arquée (1001) étant prévue sur une extrémité inférieure de la tige de pression (10), et une surface arquée orientée vers le haut (801) étant prévue au milieu du support de vanne (8), qui est en ajustement coulissant avec la portion arquée (1001).

6. La structure de dispositif pour l'ouverture et la fermeture automatiques d'une vanne de réservoir d'eaux usées d'une machine de nettoyage selon la revendication 5, une largeur de la portion arquée (1001) étant supérieure à un diamètre intérieur du trou traversant (302).

7. La structure de dispositif pour l'ouverture et la fermeture automatiques d'une vanne de réservoir d'eaux usées d'une machine de nettoyage selon l'une des revendications 4 à 6, le corps de dispositif d'entraînement comprenant un micromoteur (11) et une tige de liaison de transmission (12), la tige de liaison de transmission (12) étant disposée au-dessus de la tige de pression (10), le micromoteur (11) étant relié par des fils à la carte de commande principale (6), le micromoteur (11) étant capable d'entraîner la tige de liaison de transmission (12) à se déplacer verticalement, et la tige de liaison de transmission (12) étant capable d'entraîner la tige de pression (10) vers le bas.

8. La structure de dispositif pour l'ouverture et la fermeture automatiques d'une vanne de réservoir d'eaux usées d'une machine de nettoyage selon la revendication 7, une rangée de dents (1201) disposée verticalement étant prévue sur une paroi latérale d'une extrémité supérieure de la tige de liaison de transmission (12), un arbre de sortie du micromoteur (11) s'étendant horizontalement et étant relié à un engrenage (13), et l'engrenage (13) étant en prise avec la rangée de dents (1201).

9. La structure de dispositif pour l'ouverture et la fermeture automatiques d'une vanne de réservoir d'eaux usées d'une machine de nettoyage selon la revendication 8, le micromoteur (11) et la tige de liaison de transmission (12) étant disposés dans le corps de la machine de nettoyage (1).

10. La structure de dispositif pour l'ouverture et la fermeture automatiques d'une vanne de réservoir d'eaux usées d'une machine de nettoyage selon l'une des revendications 1 à 6, 8 et 9, le moteur principal (4) et la carte de commande principale (6) étant disposés dans le corps de la machine de nettoyage (1).
